# FASCICULE DE BREVET EUROPEEN

(11) **EP 1 045 184 B1**
(45) Date de publication et mention de la délivrance du brevet: **04.12.2002**
(21) Numéro de dépôt: 00440108.9
(22) Date de dépôt: 14.04.2000
(51) Int. Cl.: F16L 11/15

(54) **Conduit de raccordement au moins partiellement fléxible**
Wenigstens teilweise flexible Verbindungsleitung
Connection tubing at least partially flexible

(30) Priorité: 16.04.1999 FR 9904930
(43) Date de publication de la demande: 18.10.2000
(73) Titulaire: Mark IV Systemes Moteurs (Société Anonyme), 92400 Courbevoie (FR)
(72) Inventeur: Fenard, Michel, 68370 Orbey (FR)
(74) Mandataire: Franzolin, Luigi

(56) Documents cités:
- DE-A- 4 315 175
- DE-C- 4 429 504
- US-A- 3 847 184

## Description

La présente invention concerne le domaine de la circulation des fluides, notamment de fluides chauds et sous pression, dans un environnement soumis à la vibration et des mouvements relatifs des éléments connectés entre lesquels lesdits fluides sont échangés, et a pour objet un conduit de raccordement au moins partiellement flexible, adapté pour assurer la circulation de fluides, liquides ou gazeux, éventuellement chauds et sous pression entre deux unités ou modules fonctionnels.

Il existe des applications en termes de circulation de fluides dans lesquelles il est nécessaire de disposer de conduits ou de tuyaux présentant simultanément les propriétés suivantes : résistance à la chaleur, résistance à la pression, possibilité de déformation au moins partielle (longitudinale et/ou transversale) et, éventuellement, résistance aux agressions chimiques.

Ceci est notamment le cas, dans les véhicules à moteur thermique, pour le conduit ou le tuyau d'alimentation d'air se trouvant en sortie du turbocompresseur et ayant besoin d'une relative souplesse pour absorber les débattements lors de l'assemblage et des débattements lors du fonctionnement du moteur (dans le cas d'un tuyau relié entre le moteur et la caisse du véhicule).

Ce tuyau est donc soumis à des températures élevées (jusqu'à 200°C), à des pressions d'air de deux bars relatifs, voire trois bars relatifs en pic, à des débattements, éventuellement dans les trois directions spatiales, pouvant atteindre +/- 15 mm et à des vibrations (condition de pièces sous capot moteur, fixées sur le moteur).

La solution actuelle consiste à réaliser un conduit plastique avec un insert métallique emmanché à l'intérieur d'une de ses extrémités, sur lequel est fixé par le biais d'un collier de serrage (ou autre) un manchon en silicone, pour la tenue en température, armé de métal pour la tenue en pression et en débattement.

Toutefois cette solution est complexe et coûteuse et ne permet pas de répondre de manière satisfaisante à toutes les sollicitations rencontrées, les problèmes rencontrés avec cette solution consistant en l'absence de débattements suffisants (joint armé difficile à tordre) et la non-garantie de l'étanchéité en extrémité de conduit silicone (rigidité du joint armé).

US-A-3 847 184 montre un condit métallique ayant une pluralité de portions plissées selon le préambule de la revendication 1.

DE-C-44 29 504 montre un raccord d'extrémité pour un conduit plissé de matériau thermoplastique. Le raccord est formé par une portion interne partiellement insérée dans le conduit et déterminant intégralement les moyens de branchement avec un élément de circuit contigu, et par une portion externe surmoulée sur la portion inteme et sur l'extrémité du conduit plissé de manière à les soldariser. Le raccord présente une structure rélativement complexe et une résistence mécanique pas optimale.

Le but de la présente invention est la réalisation d'un conduit de raccord, lequel pourrait éliminer les problèmes rélatifs aux conduits connus et ci-dessus indiqués.

Ce but est obtenu par un conduit selon la révendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue partielle en coupe de la paroi d'un conduit selon une première variante de réalisation de l'invention ;
la figure 2 est une vue partielle en coupe de la paroi d'un conduit selon une deuxième variante de réalisation de l'invention ;
la figure 3 est une vue partielle en coupe de la paroi d'un conduit selon une troisième variante de réalisation de l'invention ;
la figure 4 est une vue en coupé d'un conduit selon une quatrième variante de réalisation de l'invention, et,
la figure 5 est une vue en coupe du conduit selon une cinquième variante de réalisation de l'invention.

Comme le montrent les figures des dessins annexés, le conduit de raccordement 1 est constitué par un tube métallique 2 comportant au moins une portion à paroi plissée 3, de manière à former au moins localement une structure à soufflet, les deux portions d'extrémité 2', 2" dudit tube 2 étant surmoulées avec un matériau thermoplastique 4, 4' pour former les moyens de branchement et, le cas échéant, de solidarisation dudit conduit 1.

Ledit tube métallique 2 est avantageusement réalisé en acier inoxydable, la ou les portions à paroi plissée 3 étant, par exemple, obtenue(s) par hydroformage.

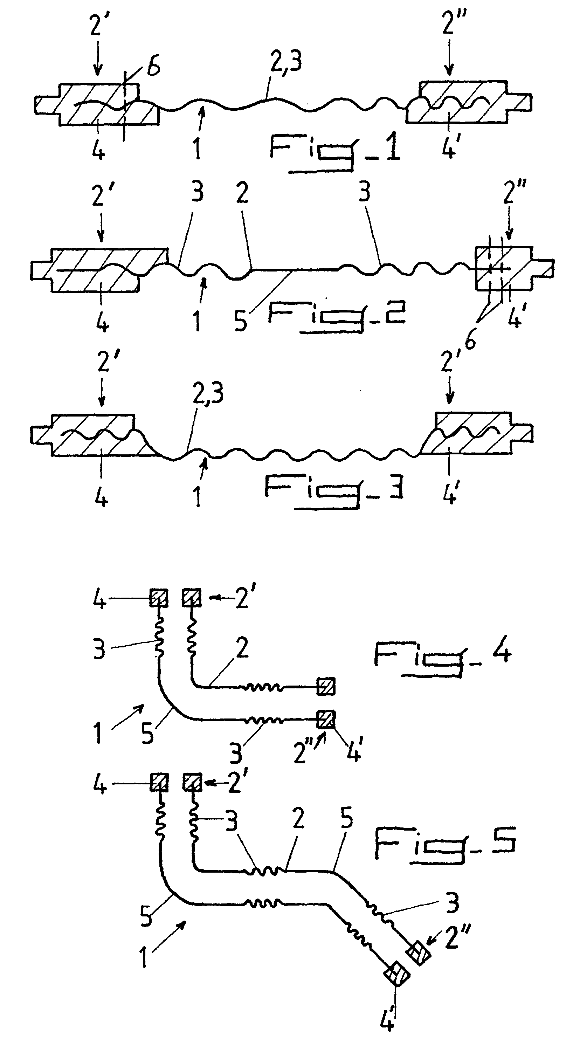

Conformément à une caractéristique de l'invention, ladite au moins une portion de tube à paroi plissée 3 présente, en coupe selon un plan longitudinal intégrant l'axe longitudinal de la portion de tube 2 considérée, une configuration ondulée, par exemple sinusoïdale ou triangulaire arrondie, de manière à présenter une conformation annelée, cette conformation pouvant varier le long d'une même portion à paroi plissée 3 (figure 1).

L'épaisseur de la paroi du tube 2, la forme des anneaux et le nombre des anneaux sont choisis en fonction des critères de rigidité, de débattement, de sollicitation en pression et de pertes de charges.

Ledit tube 2 de faible épaisseur est réalisé en un matériau présentant une bonne tenue aux huiles et à la corrosion sous capot (essences, lave glace, liquide de refroidissement, liquide de frein...) et peut être obtenu à partir d'une feuille de métal successivement roulée, soudée et hydroformée de manière à réaliser les portions à anneaux permettant la flexibilité du tube.

Selon un mode de réalisation préféré de l'invention, les surmoulages 4, 4' en matériau thermoplastique sont rapportés sur les faces externes et internes des portions d'extrémité 2', 2" du tube métallique 2 et constituent des manchons annulaires à double paroi recouvrant intimement lesdites portions d'extrémité 2, 2', le matériau constituant ces surmoulages étant adapté pour résister sans ramollissement, ni affaiblissement mécanique sensible, aux températures maximales attendues pour les fluides susceptibles de les traverser.

Ces surmoulages 4, 4' permettent notamment l'accrochage mécanique du conduit 1 et réalisent l'étanchéité de l'interface tube / conduit.

Ils s'étendent au-delà du bord des portions d'extrémité 2', 2" et peuvent éventuellement se prolonger en un manchon, voire une portion de tuyau en matériau thermoplastique.

Ces surmoulages plastiques comporteront à leurs extrémités des profils, des décrochements ou analogue favorisant leur assemblage étanche avec un élément contigu et peuvent être soudés par vibration, ou par miroir, ou par ultrasons, sur un conduit principal, lui-même en plastique, ce en réalisant une étanchéité parfaite avec ce dernier.

La solution proposée par l'invention a pour intérêt, en particulier par rapport à la solution de l'art antérieur décrite ci-dessus, la suppression d'un élément de serrage / fixation par l'opération de surmoulage. La fiabilité, par la réduction du nombre de pièces, est donc accrue.

Un intérêt économique est présent par le remplacement du manchon silicone par un tube métallique hydroformé. L'invention a donc par la même occasion un fort intérêt économique par rapport à la solution connue actuelle.

Afin d'obtenir une meilleure solidarisation entre le tube 2 et les surmoulages 4, 4', il peut être prévu que ces derniers s'étendent, au moins en partie, sur des portions à paroi plissée 3 (figures 1 à 3), éventuellement perforées.

La tenue mécanique du conduit de raccordement 1 peut être obtenu par la coopération des anneaux de la paroi plissée avec les surmoulages 4, 4', ces derniers étant préférentiellement en prise sur la ou les portions à paroi plissée 3 sur au moins trois anneaux. La résistance de la liaison tube 2 / surmoulages 4, 4' peut être améliorée en prévoyant des orifices ou des perforations 6 répartis sur le pourtour des portions d'extrémité 2', 2".

Toutefois, les surmoulages 4, 4' peuvent également être rapportés sur des portions de paroi lisses, en prévoyant un ou plusieurs décrochement(s) ou en perforant, comme indiqué ci-dessus, ces dernières de manière à permettre l'établissement de ponts de matériau thermoplastique assurant l'ancrage desdits surmoulages 4, 4'.

En vue d'éviter une perte de charge dans le conduit de raccordement 1, il peut, en outre, être prévu que les faces internes des surmoulages 4, 4' soient sensiblement de niveau avec les sommets des protubérances internes de la ou des portions à paroi plissée 3.

La section de passage du conduit 1 peut être conservée constante soit en réduisant la section du tube 1 au niveau de sa partie non recouverte par les surmoulages 4, 4' (figure 3), soit en réalisant ces dernières avec une épaisseur faible.

Conformément à une première variante de réalisation de l'invention, représentée aux figures 1 à 3 des dessins annexés, la portion à paroi plissée 3 s'étend au moins sur tout le segment du tube métallique 2 compris entre les deux surmoulages 4, 4' en matériau plastique, la paroi du tube métallique 2 est plissée sur toute la longueur de ce dernier.

Selon une seconde variante de réalisation de l'invention, et comme le montrent les figures 2, 4 et 5 des dessins annexés, le conduit 1 peut comporter au moins deux portions à paroi plissée 3 distinctes et séparées par une portion intermédiaire à paroi non plissée 5, cette dernière pouvant être avantageusement utilisée pour la fixation du conduit 1 et conférant une tenue mécanique et une rigidité améliorée au conduit 1, les portions à paroi plissée 3 n'étant formées qu'aux endroits où leur présence semble nécessaire.

En vue de pouvoir assurer une circulation des fluides selon des trajets non rectilignes, tout en conservant une certaine rigidité audit conduit 1, il peut être prévu que les portions de tube à paroi plissée 3 ne soient pas alignées entre elles, la ou les portion(s) intermédiaire(s) à paroi non plissée 5, préférentiellement lisse, formant ou comportant au moins un coude (figures 4 et 5).

Conformément à une autre variante de l'invention, représentée à la figure 5, le conduit de raccordement 1 peut comporter au moins trois portions de tube à paroi plissée 3 distinctes, séparées par deux portions de tube à paroi non plissée 5, cintrées ou non, les portions éventuellement cintrées étant situées le cas échéant dans des plans différents.

Le conduit de raccordement 1 tel que décrit ci-dessus peut être utilisé pour réaliser les connexions entre différent(e)s unités ou modules susceptibles d'échanger des fluides, notamment dans le domaine de l'automobile, à savoir, par exemple, pour relier la sortie du turbocompresseur à l'entrée de l'échangeur ou pour relier la sortie de l'échangeur à l'entrée du répartiteur.

Toutefois, il sera également possible de relier directement ce conduit de raccordement 1, en particulier par une portion d'extrémité 2', 2" à paroi plissée, sur l'un des orifices d'entrée ou de sortie du moteur.

En outre, ledit conduit de raccordement pourra également trouver application en tant qu'élément constitutif d'un circuit d'eau pressurisé.

## Revendications

1. Conduit de raccordement au moins partiellement flexible, notamment adapté pour la circulation de fluide chaud, constitué par un tube métallique (2) comportant au moins une portion à paroi plissée (3), de manière à former au moins localement une structure à soufflet, la ou les portions de tube à paroi plissée (3) présentant en coupe selon un plan longitudinal intégrant l'axe longitudinal de la portion du tube (2) considérée, une configuration ondulée, de manière à constituer une conformation annelée, **caractérisé en ce que** les deux portions d'extrémité (2', 2") dudit tube (2) sont surmoulées avec un matériau thermoplastique (4, 4'), les surmoulages (4, 4') en matériau thermoplastique étant rapportés sur les faces externes et internes des portions d'extrémité (2', 2") du tube métallique (2), et **en ce que** lesdits surmoulages (4, 4') en matériau thermoplastique constituent des manchons annulaires à double paroi recouvrant intimement lesdites portions d'extrémité (2, 2') et formant les moyens de branchement et de solidarisation dudit conduit (1) pour son assemblage avec un élément contigu, les surmoulages (4, 4') s'étendant et étant en prise sur une pluralité d'anneaux de la ou des portions à paroi plissée (3), lesdits surmoulages (4, 4') comportant à leurs extrémités des profils, des décrochements ou analogue favorisant leur assemblage avec l'élément contigu correspondant et le pourtour des portions d'extrémité (2', 2") étant pourvu d'orifices ou de perforations (6) recevant des ponts de matériau thermoplastique.

2. Conduit de raccordement selon la revendication 1, **caractérisé en ce que** les faces internes des surmoulages (4, 4') sont sensiblement de niveau avec les sommets des protubérances internes de la pu des portions à paroi plissée (3).

3. Conduit de raccordement selon l'une quelconque des revendications 1 et 3, **caractérisé en ce que** la portion à paroi plissée (3) s'étend au moins sur tout le segment du tube métallique (2) compris entre les deux surmoulages (4, 4') en matériau plastique.

4. Conduit de raccordement selon la revendication 2, **caractérisé en ce que** la paroi du tube métallique (2) est plissée sur toute la longueur de ce dernier.

5. Conduit de raccordement selon l'une quelconque des revendications 1 et 2, **caractérisé en ce qu'**il comporte au moins deux portions à paroi plissée (3) distinctes et séparées par une portion intermédiaire à paroi non plissée (5).

6. Conduit de raccordement selon la revendication 5, **caractérisé en ce que** les portions de tube à paroi plissée (3) ne sont pas alignées entre elles, la ou les portion(s) intermédiaire(s) à paroi non plissée (5), préférentiellement lisse, formant ou comportant au moins un coude.

7. Conduit de raccordement selon la revendication 5, **caractérisé en ce qu'**il comporte au moins trois portions de tube à paroi plissée (3) distinctes, séparées par deux portions de tube à paroi non plissée (5), cintrées ou non, les portions éventuellement cintrées étant situées le cas échéant dans des plans différents.

8. Conduit de raccordement selon l'une quelconque des revendications 1 à 7, **caractérisé en ce que** le tube métallique (2) est réalisé en acier inoxydable, la ou les portions à paroi plissée (3) étant obtenue(s) par hydroformage.

## Patentansprüche

1. Verbindungsleitung, insbesondere für die Zirkulation heißen Fluids, die zumindest teilweise flexibel ist und aus einem Metallrohr (2) besteht, das in wenigstens einem Abschnitt eine gefaltete Wand (3) aufweist, um so zumindest lokal eine Faltenbalgstruktur zu bilden, wobei der Abschnitt oder die Abschnitte mit gefalteter Wand (3) im Schnitt entlang einer Längsebene, welche die Längsachse des betreffenden Abschnitts des Rohrs (2) einschließt, eine gewellte Konfiguration aufweist, so daß eine Ringanordnung gebildet ist, **dadurch gekennzeichnet, daß** die beiden Endabschnitte (2', 2") des Rohres (2) mit einem thermoplastischen Material (4, 4') umspritzt sind, wobei die Umspritzungen (4, 4') aus thermoplastischem Material auf der Außen- und der Innenfläche der Endabschnitte (2', 2") des Metallrohres (2) vorgesehen sind, und daß die Umspritzungen (4, 4') aus thermoplastischem Material ringförmige Hülsen mit Doppelwand bilden, welche die Endabschnitte (2', 2") eng anliegend bedecken und die Anschluß- und Befestigungseinrichtungen der Leitung (1) zu deren Verbindung mit einem angrenzenden Element bilden, wobei sich die Umspritzungen (4, 4') sich über mehrere Ringe des oder derAbschnitte mit gefalteter Wand (3) erstrecken und mit diesen zusammengreifen, wobei die Umspritzungen (4, 4') an ihren Enden Profile, Absätze oder ähnliches aufweisen, die ihre Verbindung mit dem entsprechenden angrenzenden Element vereinfachen, und wobei der Umfang der Endabschnitte (2', 2") mit Öffnungen oder Perforationen (6) versehen ist, die Stege aus thermoplastischem Material aufnehmen.

2. Verbindungsleitung nach Anspruch 1, **dadurch gekennzeichnet; daß** die Innenseiten der Umspritzungen (4,4') im wesentlichen auf gleicher Höhe mit den Scheitelpunkten der inneren Vorsprünge des oder der Abschnitte mit gefalteter Wand (3) sind.

3. Verbindungsleitung nach einem der Ansprüche 1 und 2, **dadurch gekennzeichnet, daß** der Abschnitt mit gefalteter Wand (3) sich mindestens über das gesamte Segment des Metallrohres (2) erstreckt, das sich zwischen den beiden Umspritzungen (4, 4') aus Kunststoff befindet.

4. Verbindungsleitung nach Anspruch 2, **dadurch gekennzeichnet, daß** die Wand des Metallrohres (2) über die gesamte Länge desselben gefaltet ist.

5. Verbindungsleitung nach einem der Ansprüche 1 und 2, **dadurch gekennzeichnet, daß** sie mindestens zwei verschiedene Abschnitte mit gefalteter Wand (3) aufweist, die durch einen Zwischenabschnitt mit nicht gefalteter Wand (5) getrennt sind.

6. Verbindungsleitung nach Anspruch 5, **dadurch gekennzeichnet, daß** die Abschnitte des Rohres mit gefalteter Wand (3) nicht aufeinanderausgerichtet sind, wobei der oder die Zwischenabschnitte mit nicht gefalteter, vorzugsweise glatter Wand (5) wenigstens eine Krümmung bilden oder aufweisen.

7. Verbindungsleitung nach Anspruch 5, **dadurch gekennzeichnet, daß** sie wenigstens drei verschiedene Rohrabschnitte mit gefalteter Wand (3) aufweist, die durch zwei Rohrabschnitte mit nicht gefalteter Wand (5) getrennt sind, welche gebogen sein können, wobei die möglicherweise gebogenen Abschnitte gegebenenfalls in unterschiedlichen Ebenen angeordnet sind.

8. Verbindungsleitung nach einem der Ansprüche 1 bis 7, **dadurch gekennzeichnet, daß** das Metallrohr (2) aus rostfreiem Stahl besteht, wobei der oder die Abschnitte mit gefalteter Wand (3) durch Hydroforming gebildet sind.

## Claims

1. Connection pipe which is at least partially flexible, in particular suitable for the flow of hot fluid, consisting of a metal tube (2) comprising at least one portion with a corrugated wall (3), so as to form at least locally a bellows structure, the portion or portions of tube with a corrugated wall (3) having, in section along a longitudinal plane including the longitudinal axis of the portion of the tube (2) in question, an undulating configuration, so as to form a ringed shape, **characterized in that** the two end portions (2', 2' ') of the said tube (2) are overmoulded with a thermoplastic (4, 4'), the thermoplastic overmouldings (4, 4') being connected to the outer and inner faces of the end portions (2', 2' ') of the metal tube (2), and **in that** the said thermoplastic overmouldings (4, 4') form double-walled annular sleeves firmly covering the said end portions (2, 2') and forming the means for connecting and securing the said pipe (1) for its assembly with a contiguous element, the overmouldings (4, 4') lying and being engaged on a plurality of rings of the portion or portions with a corrugated wall (3), the said overmouldings (4, 4') comprising, at their profile ends, recesses or the like favouring their assembly with the corresponding contiguous element and the perimeter of the end portions (2', 2") being provided with orifices or perforations (6) receiving thermoplastic bridges.

2. Connection pipe according to Claim 1, **characterized in that** the inner faces of the overmouldings (4, 4') are substantially level with the apexes of the inner protuberances of the portion or portions with a corrugated wall (3).

3. Connection pipe according to either of Claims 1 and 2, **characterized in that** the portion with a corrugated wall (3) lies at least over the entire segment of the metal tube (2) between the two plastic overmouldings (4, 4',).

4. Connection pipe according to Claim 2, **characterized in that** the wall of the metal tube (2) is corrugated over the entire length of the latter.

5. Connection pipe according to either of Claims 1 and 2, **characterized in that** it comprises at least two distinct portions with a corrugated wall (3) separated by an intermediate portion with an uncorrugated wall (5).

6. Connection pipe according to Claim 5, **characterized in that** the portions of tube with a corrugated wall (3) are not aligned with each other, the intermediate portion or portions with an uncorrugated, preferably smooth, wall (5) forming or having at least one bend.

7. Connection pipe according to Claim 5, **characterized in that** it comprises at least three distinct portions of tube with a corrugated wall (3) separated by two portions of tube with an uncorrugated wall (5), which may or may not be bent, the possibly bent portions being located as required in different planes.

8. Connection pipe according to any one of Claims 1 to 7, **characterized in that** the metal tube (2) is made of stainless steel, the portion or portions with a corrugated wall (3) being obtained by hydroforming.
